# EUROPEAN PATENT APPLICATION

(11) **EP 3 838 444 A1**
(43) Date of publication of application: **23.06.2021**
(21) Application number: 19020709.2
(22) Date of filing: 18.12.2019
(51) Int. Cl.: B22F 3/105, B33Y 10/00, B33Y 30/00, B33Y 50/02

(54) **METHOD AND DEVICE FOR REMOVING IMPURITIES IN ADDITIVE MANUFACTURE USING HELIUM AND HYDROGEN GASES**

(71) Applicant: Linde GmbH, 82049 Pullach (DE)
(72) Inventor: Foret, Pierre, 80796 München (DE)
(74) Representative: Gellner, Bernd

(57) **Abstract**

The present invention refers to a method and a corresponding device for making a component made by an additive manufacturing process, the process comprising removing an impurity layer from a powder by pre-heating the powder to a predetermined temperature in a gaseous atmosphere, wherein said atmosphere comprises hydrogen gas; and fusing at least a portion of the pre-heated powder to create the component. Such a process substantially eliminates the adverse effects caused by the presence of the impurity layer and improves chemical characteristics of the resultant component.

## Description

The present invention relates to a method and a device for producing components by additive manufacture (AM), particularly, but not exclusively, components made by electron beam melting (EBM).

The main differences between processes for additive manufacturing (AM) are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies.

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in SLM the material is fully melted rather than sintered, allowing different properties (crystal structure, porosity, and so on). SLS involves the use of a high power laser (for example, a carbon dioxide laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed. Because finished part density depends on peak laser power, rather than laser duration, a SLS machine typically uses a pulsed laser.

Selective laser melting (SLM) is a particular rapid prototyping, 3D printing, or Additive Manufacturing (AM) technique designed to use a high power-density laser to melt and fuse metallic powders together. In many SLM is considered to be a subcategory of Selective Laser Sintering (SLS). The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen at oxygen levels below 500 parts per million. Once each layer has been distributed, each 2D slice of the part geometry is fused by selectively melting the powder. This is accomplished with a high-power laser beam, usually an ytterbium fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Electron-beam additive manufacturing or electron-beam melting (EBM) is a type of additive manufacturing, or 3D printing, for metal parts. The raw material (metal powder or wire) is placed under a vacuum and fused together from heating by an electron beam. This technique is distinct from selective laser sintering as the raw material fuses having completely melted.

Metal powders can be consolidated into a solid mass using an electron beam as the heat source. Parts are manufactured by melting metal powder, layer by layer, with an electron beam in a high vacuum. This powder bed method produces fully dense metal parts directly from metal powder with characteristics of the target material. The EBM machine reads data from a 3D CAD model and lays down successive layers of powdered material. These layers are melted together utilizing a computer-controlled electron beam. In this way it builds up the parts. The process takes place under vacuum, which makes it suited to manufacture parts in reactive materials with a high affinity for oxygen, e.g. titanium. The process is known to operate at higher temperatures (up to 1000 °C), which can lead to differences in phase formation though solidification and solid-state phase transformation.

The powder feedstock is typically pre-alloyed, as opposed to a mixture. That aspect allows classification of EBM with selective laser melting (SLM), where competing technologies like SLS and DMLS require thermal treatment after fabrication. Compared to SLM and DMLS, EBM has a generally superior build rate because of its higher energy density and scanning method.

Direct metal laser sintering (DMLS) is an additive manufacturing metal fabrication technology, occasionally referred to as selective laser sintering (SLS) or selective laser melting (SLM), that generates metal prototypes and tools directly from computer aided design (CAD) data. It is unique from SLS or SLM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a .stl file is created and sent to the machine's computer program. The DMLS machine uses a high-powered 200 watt Yb-fiber optic laser. Inside the build chamber area, there is a material dispensing platform and a built platform along with a recoater blade used to move new powder over the built platform. The technology fuses metal powder into a solid part by melting it locally using the focused laser beam. Parts are built up additively layer by layer, typically using layers 20 micrometers thick.

In General additive manufacturing is a manufacturing technology that includes a methodology whereby a heat source melts a feedstock of material which is deposited onto a substrate. Computer control of the movement of the heat source, and the source of the feedstock, makes it possible to build complex components. In additive manufacturing the processing is not limited to the above-mentioned methods in which metal powders are processed but composites or polymers are processed. The heat source can include (but is not limited to) the already mentioned laser beam, an arc, or other plasma-based heat sources.

One of the challenges of EBM is powder spreading, also referred to as "smoke". The smoke disturbs the generative process and leads to reduced build up resolution. Every single electron in the beam carries one elementary charge. The non-reflected portion of electrons accumulates their charges in the powder bed. If the electric conductivity in the powder bed is insufficient and the charge received at the powder bed cannot be quickly transmitted to ground, this can lead to electrostatic charging and mutual repulsion of the powder particles.

Currently, preheating the powder bed is used to reduce the adverse "smoke" effect. Such preheating is performed under vacuum and causes the particles to be lightly sintered together. Furthermore, during the build a Helium atmosphere is used to prevent beam expansion. A problem with this pre-heating approach is that if the oxide layer on the powder is too thick (due to long storage or previous use of the powder, for example) the pre-heating step doesn't work properly.

It is an object of the present invention to provide a method and a device for producing a component by additive manufacture that at least partially mitigates the problems described above.

It is also an object of the present invention to provide a method and a device for manufacturing a component by additive manufacture wherein the impurity layer is successfully removed.

One or more of these problems are solved by a method according to independent claim 1 and by an apparatus according to independent claim 11. Advantageous embodiments are defined in the sub-claims.

According to an aspect of the present invention a method making a component by additive manufacture is provided, said method comprises the steps of: removing an impurity layer from a powder by pre-heating the powder to a predetermined temperature in a gaseous atmosphere, wherein said atmosphere comprises hydrogen gas; and fusing at least a portion of the pre-heated powder to create the component.

Advantageously, this method allows impurities to be removed from the powder. As will be well understood by the skilled person, the quality of the resultant component(s) strongly depends on the properties of the bulk material(s) used for manufacturing of the component(s). Thus, powder comprising high loads of surface oxygen (for instance in the form oxide layers) will adversely affect the final mechanical properties of the component(s) and will result in the final component with finely dispersed oxide defects and/or large oxide agglomerates across its structure. The present invention helps to minimize the presence of oxygen in the form oxides in the bulk powder prior to the EBM process.

Furthermore, the present invention advantageously minimizes the "smoke" effect that would normally arise during the EBM process, because the removal of the impurity layer ensures that light sintering of the powder occurs during the preheating step, and increases the conductivity of the powder, thereby substantially reducing the amount of "smoke" that is formed during the build.

In an embodiment, the impurity layer is an electrically insulating layer. Said electrically insulating layer can be an oxide layer. An oxide layer is normally formed on the surface of the component prior to the processing. Its presence is disadvantageous as, depending on the thickness of the oxide layer, it may lead to undesired product properties like increased surface roughness or poor compressive properties of the starting powder, as well as increasing the "smoke" effect described above. The thickness of the oxide layer typically depends on the storage conditions of the powder, and whether or not the powder has previously been used in another AM process. Oxide layers are typically thicker for powders that have been stored for a long time or previously used.

In an embodiment, the additive manufacturing process is electron beam melting (EBM). EBM is a rapid AM method that allows to melt the powder layer by layer, thus resulting in fully dense, void free components.

In an embodiment, a partial pressure of helium is in a range between 1X10⁻³ mbar and 5x10⁻³ mbar. This pressure range (known as "controlled vacuum") allows for the process to work efficiently during the electron beam operation as well as to stabilize the beam and prevent a buildup of electrical charge in powder.

In yet another embodiment, a concentration of helium in the mixture of helium and hydrogen gases is no more than 8%. This concentration range allows for the most use of the helium gas, and is an efficient ratio between the helium and hydrogen that is still safe to operate (i.e. non-flammable), thus eliminating the need for additional safety requirements to be introduced during the AM process.

In an embodiment, the gaseous atmosphere is recirculated in a processing chamber.

In another embodiment, the powder is a recycled powder. Advantageously, this allows for more economical use of the metal supplies. Introduction of the hydrogen gas into the process allows for reduction of the surface oxide layer and, in turn, leads to more pure resulting components, even if an oxide layer was initially present on the powder. Accordingly, using of the hydrogen-helium gas mix advantageously allows "aged" recycled powders with high surface oxygen content to be used without adverse effect on the component quality.

In yet another embodiment, method further comprises a step of removing oxygen gas generated during the pre-heating. This step allows to eliminate dangerous accumulation of the oxygen gas in the helium-hydrogen mixture that my result in the explosion. It is known that certain concentrations of hydrogen and oxygen can become a flammable and unstable gas mixture. Thermodynamically, the reaction between hydrogen and oxygen is very favorable, and when some sort of energy (e.g. heating) is applied the reaction is started and quickly leads to an explosion. Removal of the free oxygen from the gas mixture avoids a situation where the ratio between the two gases may lead to an undesired combustion process.

In an embodiment, the step of removing oxygen gas comprises passing the gaseous atmosphere through an oxygen capture membrane. Advantageously, this allows for a significant reaction of the oxygen gas in the mixture. Oxygen capture membranes are selectively permeable materials through which only oxygen can flow, and the other gases remain in the mixture and recirculated.

According to an aspect of the present invention, an apparatus for EBM comprising:
- a manufacturing space;
- a heat source;
- a powder bed;
- a source of gas comprising hydrogen; and
- a controller,
wherein the controller is arranged to:
control the heat source to pre-heat a powder in the powder bed to a predetermined temperature; control the source of gas to maintain at least a predetermined partial pressure of hydrogen during said pre-heating; and control the heat source to fuse at least a portion of the pre-heated powder to create a component. Optionally, the heat source is an electron beam.

In an embodiment, the apparatus further comprises an oxygen sensor and an oxygen capture membrane, wherein the controller is configured to control an oxygen concertation in the manufacturing space in dependence on the data obtained from the oxygen sensor.

The invention is explained below with the aid of an embodiment shown in the drawings. The drawing shows in:
Figure 1 a rough schematic view of a system for powder bed additive manufacturing by Electron Beam Melting (EBM), and
Figure 2 a rough schematic view of the system for supplying and controlling of the process gas.

It is clear that the present invention is applicable for all methods and devices for additive manufacturing disclosed in this description.

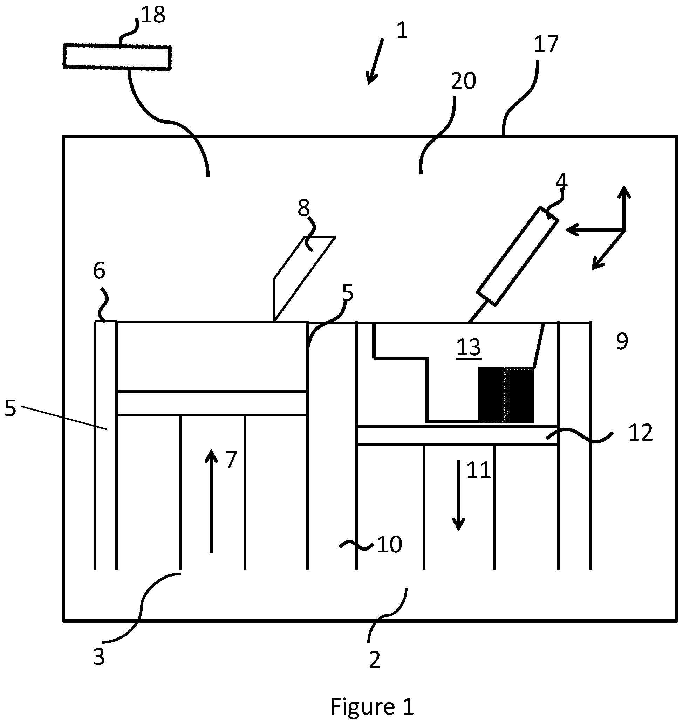

An apparatus 1 according to an embodiment of the present invention comprises a production cylinder 2, a delivery cylinder 3 and a heat source 4 (figure 1).

The heat source 4 according to a preferred embodiment comprises an electron beam and a corresponding scanner system for melting metal powder (not shown). However, other heat sources, such as a laser in combination with a scanning system, are also possible.

The delivery cylinder 3 comprises a housing 5 with a wall 6 wherein a powder delivery piston 7 is disposed inside the housing 5.

A powder applying device 8, for example a roller, is provided for pushing a metal powder from the delivery cylinder 3 to the production cylinder 2.

The production cylinder 3 comprises a housing 9 with a wall 10.

A lift table 11 with a built platform 12 is disposed inside the wall 10 of the housing 9. The lift table 11 and the corresponding built platform 12 embody a fabrication piston.

The wall 10 of the housing 9 and the built platform 12 of the lift table 11 of the production cylinder 2 define a built space 13.

The built space 13 houses the fabrication powder bed and therefore the object being fabricated.

The built platform 12 can be an integral part of the lift table 11 of the fabrication piston or a separate part connected to the lift table 11.

Furthermore a processing chamber 17 is provided surrounding the production cylinder 2, the delivery cylinder 3 and the heat source 4.

The manufacturing space 20 according to the present invention is therefore the build space 13 of the production cylinder 2 defined by the 10 wall of the housing 9 of the production cylinder 2 and the lift table 11 with the built platform 12 disposed inside the wall 10 of the housing 9, and/or the manufacturing space is the room within the processing chamber 17.

The apparatus 1 may be used to produce parts by Electron Beam Melting (EBM) in the conventional way. Briefly, at the start of the process, the electron beam 4 may be controlled to heat the platform 12 and a first layer of powder to a predetermined temperature at which the process is to take place. This temperature must be below the melting point of the powder, but is high enough to cause light sintering of the powder. For example, the predetermined temperature may be as high as 1000°C or more. The scanner system then controls the electron beam 4 to further heat selected portions of the first layer of powder so as to melt these portions. A further layer of powder is then applied on top of the powder bed, and the electron beam is then controlled to first heat the further layer of powder to the predetermined temperature, and then to further heat selected regions so as to melt the selected regions. The process is repeated until all of the parts of the component that are required to be fused have been melted by the electron beam 4. At this point, formation of the part is complete.
The process occurs in a gaseous atmosphere under "controlled vacuum" conditions. Herein, controlled vacuum means that the partial pressure of the helium in gaseous mixture is kept preferably in the range of 1x10⁻³ mbar and 5x10⁻³ mbar. However other vacuum ranges are also anticipated. Helium is chosen as a process gas as it can prevent electron beam expansion.

Prior to the melting process the powder is pre-heated inside the manufacturing space 20 in the presence of the mixture of helium and hydrogen. The concentration of hydrogen in the helium-hydrogen mixture normally does not exceed 8%. This concentration is considered to be sufficient to reduce the surface oxygen present in the powder and at the same time to be safe to operate to avoid explosion when in contact with oxygen.

Surface oxygen is an impurity and can be present as an oxide layer on the surface of the metal powder used for the component manufacturing. Its presence is particularly prominent when using old ("aged") or recycled powder during the manufacturing, where oxygen content can be high compared to fresh and unused powder. The oxide layer acts as an insulating layer and is disadvantageous as i) it prevents fusing of the powder particles during sintering and ii) it reduces the conductivity of the powder bed, thereby inhibiting transmission of electrical charge away from the powder bed. Both of these effects act to increase the amount of "smoke" that is produced during the EBM process.

"Smoke" is defined herein as a powder displacement under the electron beam during the EBM process, that results from electrical charge buildup. Specifically, smoke is likely to occur when the mutual repulsive forces acting between the powder particles as a result of the charging of the powder bed exceed the forces holding the powder particles together. In order to avoid "smoking", a mixture of helium and hydrogen is used to reduce the surface oxide layer and, in turn, to eliminate adverse effects caused by "smoke" during the melting process. Heating of the metal powder in the absence of reducing agent, such as hydrogen gas, does not successfully eliminate the oxide layer during the pre-heating stage, especially when the thickness of the layer is significant.

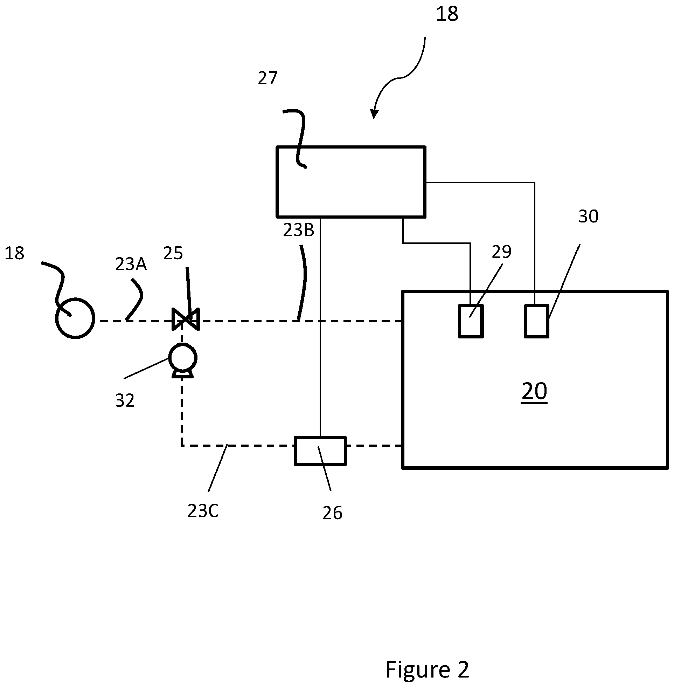

According to an embodiment, a system 18 for supplying gases to the manufacturing space 20 and oxygen monitoring and controlling is illustrated in figure 2. A control unit 27 is provided as part of the system 18. The control unit 27 receives signals from a temperature sensor 29 and an oxygen sensor 30, each of which are disposed within the manufacturing space 20.

It will be understood that in the present embodiment the manufacturing space 20 additionally contains all of the components shown in figure 1. However, in alternative embodiments, the manufacturing space may be configured to produce components by a different method of additive manufacture (AM). Accordingly, different components may be present in the manufacturing space in such embodiments.

The system comprises a gas supply 22 that provides process gas to the manufacturing space through a conduit 23. It is understood that the process gas is a helium gas, or a mixture of helium and hydrogen gases.

The gas supply may comprise a single pressurized gas cylinder containing the pre-mixed process gas. In an alternative embodiment, two or more cylinders containing different gases can be provided. One cylinder can be, for example, an inert gas like helium, and in the other cylinder can be a reactive gas like hydrogen (not shown). According to such an embodiment a mixing device may be provided for mixing the gases. However, providing a single cylinder containing the pre-mixed gas is more preferable due to flammability of the hydrogen gas. As discussed above, a mixture of hydrogen and helium in which the concentration of hydrogen is less than 8% is non-flammable. Therefore, pre-mixed mixtures can be considered a safer choice.

The oxygen sensor 30 is used for measuring the proportion of oxygen (O₂) in the manufacturing space 20. This is important because the presence of oxygen in the manufacturing space containing hydrogen is undesirable as it may lead to accidental explosion when reaching unsafe limits during the printing process. Furthermore, it is desirable to remove of the excess oxygen as it may further react with the metal surface under heating and form an oxide layer, thus requiring more hydrogen to be supplied into the chamber.

In general, the machine design is so that the oxygen sensor is relatively away from the zone of interest, i.e. the laser-powder matter interaction area. For example, a sensor placed at the top of the chamber, may not be representative of the process and could be influenced by the shielding gas density.

By sampling a little bit of gas next to the baseplate, a measurement of the oxygen representative of the melt pool surrounding is performed. If the level or oxygen exceeds predetermined limits as determined by the controller 27, the process gas is pumped through an oxygen capture membrane 26. The membrane 26 can be a semi-permeable membrane that captures oxygen from the mixture while allowing other gases to flow freely through it.

A three-way valve 25 connects the gas supply with the chamber.

The valve 25 has three positions:
I. connect the first conduit 23A to the second conduit 23B;
II. connect the second conduit 23B to the third conduit 23C; or
III. connect the second conduit 23B and the manufacturing space 20 to an exhaust conduit (not shown).

It will be understood that in position I, the valve allows flow of process gas from the supply 22 into the manufacturing space 20.

In position II, the valve allows recirculation of the process gas within the manufacturing space 20 by pump 32. The process gas is passed through the oxygen capture membrane 26 and returned back to the manufacturing space via the conduit 23B

In position III, the valve allows gas from within the manufacturing space to be purged by pump 32..

In some embodiments, the control unit 27 may also be operable to control the heat source 4, the roller 8, the delivery unit 3 and the lift table 11 so as to create a part of a desired geometry. However, in other embodiments a separate control unit may be provided to control the powder delivery and heating processes.

Unless otherwise stated, all technical features described in connection with the embodiments of the apparatus are applicable in connection with method steps for the method according to the present invention.

### List of Reference Numbers

- 1: device
- 2: production cylinder
- 3: delivery cylinder
- 4: heat source
- 5: housing
- 6: wall
- 7: powder delivery piston
- 8: powder applying device
- 9: housing
- 10: wall
- 11: lift table
- 12: built platform
- 13: build space
- 14: device for feeding a liquid inert cryogen
- 17: processing chamber
- 18: oxygen monitoring and controlling system
- 20: manufacturing space
- 22: gas supply
- 23: inlet conduit
- 26: oxygen capture membrane
- 29: temperature sensor
- 30: oxygen sensor
- 31: cooling jacket
- 32: pump

## Claims

1. Method for making a component by additive manufacture comprising the steps of:
removing an impurity layer from a powder by pre-heating the powder to a predetermined temperature in a gaseous atmosphere, wherein said atmosphere comprises a mixture of hydrogen and helium gases; and
fusing at least a portion of the pre-heated powder to create the component.

2. Method of claim 1, wherein the impurity layer is an electrically insulating layer.

3. Method of claim 2, wherein the electrically insulating layer is an oxide layer.

4. Method as claimed in any preceding claim, wherein the additive manufacturing process is electron beam melting (EBM).

5. Method as claimed in claim 4, wherein the powder is a recycled powder.

6. Method as claimed in any preceding claim, wherein the pressure during the preheating is between 1x10⁻³ mbar and 5x10⁻³ mbar.

7. Method as claimed in any preceding claim, wherein a concentration of helium in the mixture of helium and hydrogen gases is no more than 8%.

8. Method as claimed in any preceding claim, wherein the gaseous atmosphere is recirculated in a processing chamber.

9. Method as claimed in any preceding claim, said method further comprising a step of removing oxygen gas generated during the pre-heating.

10. Method of claim 9, wherein the step of removing oxygen gas comprises passing the gaseous atmosphere through an oxygen capture membrane.

11. An apparatus for EBM comprising:
- a manufacturing space;
- a heat source;
- a powder bed;
- a source of gas comprising hydrogen and helium; and
- a controller,
wherein the controller is arranged to:
control the heat source to pre-heat a powder in the powder bed to a predetermined temperature; control the source of gas to maintain at least a predetermined partial pressure of hydrogen during said pre-heating; and
control the heat source to fuse at least a portion of the pre-heated powder to create a component.

12. An apparatus as claimed in claim 11, wherein the heat source is an electron beam.

13. An apparatus of claim 11 or claim 12 further comprising an oxygen sensor and an oxygen capture membrane, wherein the controller is configured to control an oxygen concentration in the manufacturing space in dependence on the data obtained from the oxygen sensor.
